# DEMANDE DE BREVET EUROPEEN

(11) **EP 0 713 803 A1**
(43) Date de publication de la demande: **29.05.1996**
(21) Numéro de dépôt: 95118476.1
(22) Date de dépôt: 23.11.1995
(51) Int. Cl.: B60Q 1/14, H01H 25/04

(54) **Commutateur électrique, notamment pour la commande d'éclairage d'un véhicule**

(30) Priorité: 24.11.1994 FR 9414255
(71) Demandeur: VALEO ELECTRONIQUE, F-94000 Creteil (FR)
(72) Inventeur: Bonnet, Michel, F-91140 Villebon/Yvette (FR)
(74) Mandataire: Gamonal, Didier

(57) **Abrégé**

Le commutateur comporte à l'intérieur d'un boîtier (1) un pont inverseur (2), un élément inverseur (13) propre à être manoeuvré par un index saillant (15) porté par le pont inverseur (2). Le pont inverseur (2) est monté à articulation dans le boîtier (1) à l'une de ses extrémités. A l'autre de ses extrémités ledit pont (2) coopère avec une came de sélection (5) montée à articulation dans le boîtier (1) et soumise à l'action d'un moyen élastique (6). L'élément inverseur (13) consiste en une came inverseuse montée à articulation dans le boîtier (1).

Application véhicule automobile.

## Description

La présente invention concerne les commutateurs électriques, notamment pour la commande de l'éclairage d'un véhicule, comportant à l'intérieur d'un boîtier, un élément d'entraînement, dit pont inverseur, propre à être soumis à l'action de moyens de commande à la disposition de l'utilisateur, un élément inverseur monté en dessous du pont inverseur et propre à être manoeuvré, après rattrapage d'un jeu, par un index saillant porté à articulation par le pont inverseur, une première pièce de contact électrique mobile, portée par le pont inverseur, une seconde pièce de contact électrique mobile, portée par l'élément inverseur, lesdites pièces de contact étant propres à coopérer avec des pistes électriques portées par le boîtier pour établir ou interrompre des circuits électriques.

Un tel commutateur est décrit par exemple dans les documents FR-A-2 607 961 et FR-A-2 657 458 auxquels on pourra se reporter pour plus de précisions.

Ces commutateurs permettent de réaliser la fonction appel-optique ainsi que la fonction inversion code-phare.

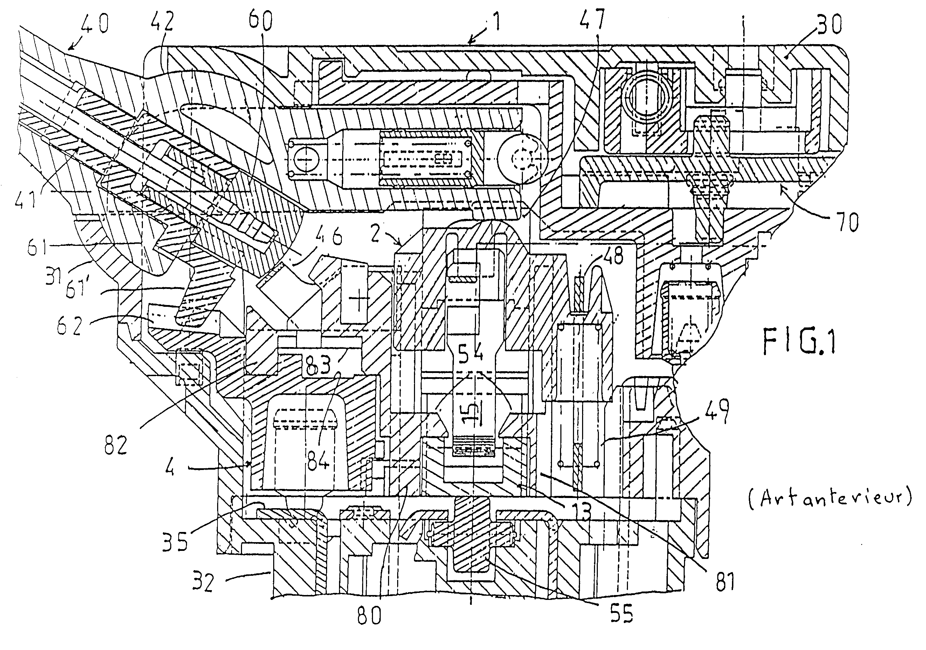

Plus précisément (figure 1) le commutateur comporte un boîtier 1 à l'extérieur duquel fait saillie une manette 40,41 propre à être actionnée par l'utilisateur.

Le boîtier comporte un couvercle 30, une ceinture 31 et une partie basse 32 portant un circuit électrique 35, usuellement sous forme d'une plaque métallique prédécoupée, avec des pistes électriques pour l'alimentation de l'éclairage du véhicule.

La manette de commande 40,41 présente des premiers moyens de commande 41 et des seconds moyens de commande 40 à la disposition de l'utilisateur, les premiers moyens 41 étant montés concentriquement à l'intérieur des seconds moyens 40.

Ces seconds moyens 40 consistent usuellement en un levier rotulant portant, à l'intérieur du boîtier 1, une portion d'extrémité 42 dotée d'une portion sphérique emprisonnée entre les parties 30 et 31 conformées pour coopérer de manière rotulante avec ladite portion sphérique.

Le levier rotulant 40 permet, lors d'un mouvement perpendiculaire au plan de la figure 1, d'actionner un dispositif de manoeuvre 70 avec une chape pour la commande des feux clignotants du véhicule.

Le levier 40 présente une protubérance 47 propre à coopérer avec la partie supérieure du pont inverseur 2. En faisant pivoter le levier 40 dans le plan de la figure 1 on déplace à translation, à l'encontre de ressorts non visibles, dans une première course le pont inverseur 2 auquel est attelé un dispositif d'appel-optique 48,49 comportant une lame de contact mobile 48 propre à établir des contacts électriques par coopération avec les pistes électriques du circuit 35 précité.

Le pont inverseur porte à articulation un index 15 saillant propre à manoeuvrer l'élément inverseur en forme de chariot 13 pour réalisation de la fonction code-phare par coopération de la seconde pièce de contact électrique (non visible à la figure 1) avec l'une des pistes électriques du circuit 35.

Au cours de ces déplacements, le pont inverseur 2 est guidé par des parois 80,81 du boîtier 1.

Les premiers moyens de commande 41 présentent une pièce en forme de fourreau manoeuvrable à partir d'une bague (non visible) portée par une pièce (non visible) solidaire du levier 40 avec intervention de moyens d'indexage du type à plongeur permettant par rotation de ladite bague de sélectionner les positions repos-ville-route de l'éclairage du véhicule sachant qu'en position route les phares (ou projecteurs) et les codes du véhicule peuvent être allumés, tandis qu'en position ville les lanternes ou les codes du véhicule peuvent être allumés.

Les moyens 41 présentent une extrémité 61' dentée pour création de moyens d'engrènement pour coopération avec des moyens d'engrènement complémentaires portés par un chariot sélecteur 4 équipé de deux plots de contact portés par des plongeurs pour coopération avec le circuit 35 et établissement de connexions pour l'alimentation électrique des feux d'éclairage du véhicule.

On notera que pour ce faire, le boîtier est cloisonné en compartiment globalement parallèle notamment par des parois 80,81,82 parallèles entre elles, le chariot sélecteur 4 étant disposé dans la partie basse de la ceinture 31 dans un premier compartiment, tandis que le pont inverseur 2 et le chariot 13 sont disposés dans un deuxième compartiment délimité par les parois 80,81, le dispositif d'appel-optique 48,49 étant disposé dans un troisième compartiment, le pont inverseur traversant pour ce faire la paroi 81.

Par ailleurs la manette porte à son extrémité un bouton mobile axialement propre à coopérer avec un contact 46 pour la commande de l'avertisseur sonore du véhicule.

Toutes ces dispositions donnent satisfaction, néanmoins la présence du chariot inverseur complique la réalisation, ledit chariot 13 étant propre à coopérer lors de sa translation avec un galet 55 porté par la partie basse 32 du boîtier 1 en étant soumis à l'action d'un ressort non visible.

Le pont inverseur est également soumis à l'action de ressorts.

En outre la fonction appel-optique ne permet pas un auto-nettoyage des pistes, car le dispositif d'appel-optique 48,49 effectue un mouvement de translation avec le pont 2 entraînant un contact ponctuel avec le circuit 35 en sorte qu'usuellement les contacts sont réalisés avec des grains d'argent.

La présente invention a pour objet de pallier ces inconvénients de manière simple et économique et donc de supprimer le chariot inverseur tout en ayant un auto-nettoyage des pistes électriques.

Suivant l'invention un commutateur électrique du type sus-indiqué est caractérisé en ce que le pont inverseur est monté à articulation à l'une de ses extrémités dans le boîtier, en ce que ledit pont coopère à l'autre de ses extrémités avec une came de sélection montée à articulation dans le boîtier et soumise à l'action d'un moyen élastique s'appuyant sur une paroi du boîtier pour solliciter ladite came en direction de l'extrémité concernée du pont inverseur, et en ce que l'élément inverseur consiste en une came inverseuse montée à articulation dans le boîtier.

Toutes ces dispositions permettent de remplacer le chariot inverseur par une came inverseuse de forme plus simple, tout en ayant une bonne sensation tactile grâce à la came de sélection soumise à l'action d'un moyen élastique. On diminue le nombre de ressorts ainsi que les risques de coincement du fait que le pont inverseur et les cames sont montés de manière pivotante. En outre il n'y a pas besoin de galet. On obtient une sûreté de fonctionnement.

De plus on obtient un auto-nettoyage des pistes de contact puisque le pont inverseur est monté à articulation dans le boîtier.

Ainsi il y a un auto-nettoyage des pistes électriques de la fonction appel-optique, la première pièce de contact électrique se déplaçant le long des pistes électriques concernées lors du pivotement du pont inverseur. Ainsi il n'y a pas besoin de grain d'argent.

Suivant une autre caractéristique de l'invention, l'index est d'un seul tenant avec le pont inverseur en étant relié à celui-ci par une charnière fine et par deux bretelles élastiques ondulées disposées de part et d'autre dudit index. Ces bretelles permettent de maintenir l'index dans une position centrale de repos et également d'assurer un rappel de celui-ci.

Grâce à cette disposition on diminue considérablement le nombre des pièces et ce de manière simple et économique.

D'une manière générale on diminue les bruits du fait de l'absence d'un chariot inverseur soumis à l'action d'un ressort.

La description qui va suivre illustre l'invention en regard des dessins annexés dans lesquels :
- la figure 1 est une vue en coupe axiale partielle d'un commutateur de l'art antérieur conforme au document FR-A-2 657 748 ;
- la figure 2 est une vue analogue à la figure 1 pour un exemple de réalisation selon l'invention, le chariot sélecteur ayant été omis ainsi que le dispositif de clignotant pour une meilleure compréhension ;
- la figure 3 est une vue en coupe selon la ligne 3-3 de la figure 2 ;
- la figure 4 est une vue à plus grande échelle d'une partie de la figure 3 ;
- la figure 5 est une vue selon la flèche 4 de la figure 2 ;
- la figure 6 est une vue simplifiée montrant en partie le chariot sélecteur et les butées portées par le pont inverseur.

Le commutateur électrique décrit ci-dessus est analogue à celui décrit dans le document FR-A-2 657 458 auquel on pourra se reporter pour plus de précisions.

Par simplicité les éléments communs à l'art antérieur et à la présente invention seront affectés des mêmes signes de référence.

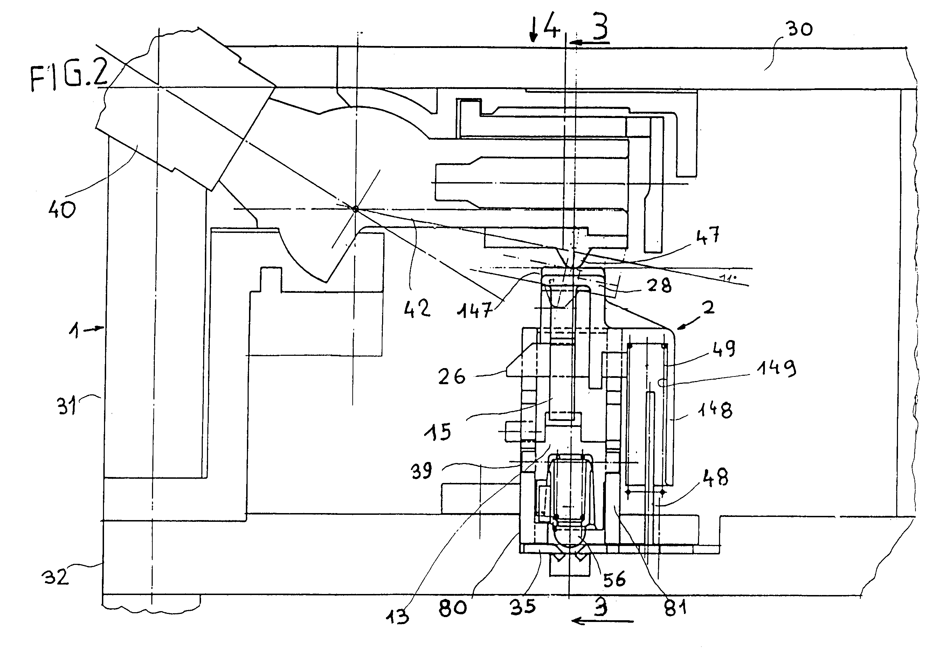

Ainsi dans les figures 2 à 6 on voit en 1 un boîtier, ici en matière plastique électriquement isolante, de forme globalement parallélépipédique en trois parties 30,31,32 reliées entre elles de manière connue en soi par des moyens d'encliquetage (non visibles) sous forme de pattes s'engageant dans des fentes complémentaires comme dans le document FR-A-2 657 458.

En variante la liaison en trois parties peut être réalisée par vissage.

La partie supérieure 30 forme un couvercle, tandis que la partie intermédiaire 31 forme une ceinture et la partie basse 32 une platine portant un circuit électrique 35, sous forme d'une plaque électriquement conductrice prédécoupée avec des pistes électriques conductrices notamment pour l'alimentation de l'éclairage du véhicule automobile.

La partie basse 32 présente également des languettes d'alimentation électrique pour formation d'une première partie d'un dispositif de connexion.

C'est avec ce circuit 35 qu'est propre à coopérer une seconde pièce de contact électrique mobile 56 portée par un élément inverseur 13.

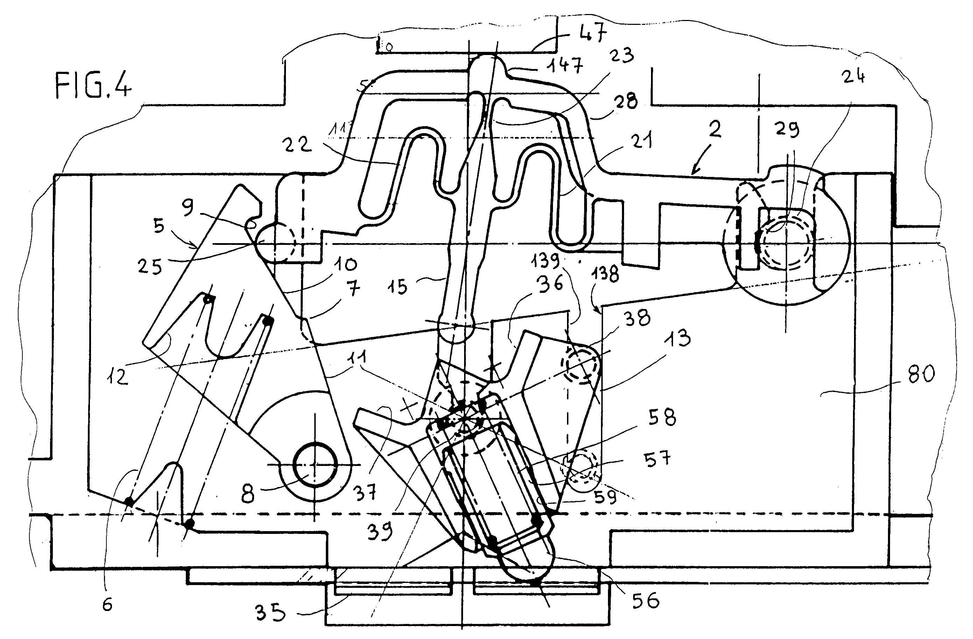

Ici cette pièce de contact 56 consiste en un plot électriquement conducteur, de forme hémisphérique, porté par un plongeur en matière plastique 57 (figure 4) monté mobile à translation dans un trou borgne 59 que présente centralement l'élément inverseur 13.

Le plongeur 57 est de forme creuse en sorte qu'un ressort 58 du type ressort à boudin est monté à l'intérieur du plongeur 57 et s'appuie à l'une de ses extrémités sur le fond du plongeur 57 au voisinage du plot 56 et à l'autre de ses extrémités sur le fond du trou borgne 59.

Le plongeur 57 est ainsi monté mobile de manière rétractable à l'intérieur du trou 59, le ressort 58 sollicitant en permanence le plot 56 au contact de la piste concernée du circuit 35.

L'élément inverseur 13 est monté en dessous d'un élément d'entraînement 2 dit pont inverseur.

Plus précisément le pont inverseur 2 est propre à être soumis à l'action de moyens de commande 40,42 à la disposition de l'utilisateur.

Ici les moyens de commande consistent, comme à la figure 1, en une manette de commande comportant un levier rotulant 40 avec une portion d'extrémité 42 portant une protubérance en forme de bossage 47 propre à coopérer avec la partie supérieure du pont inverseur 2, plus précisément avec une protubérance 147 saillante en direction du bossage 47.

Les protubérances 47,147 s'étendent perpendiculairement l'une par rapport à l'autre et ont une extrémité libre arrondie pour leur contact ponctuel.

La portion 42 est dotée d'une portion sphérique emprisonnée entre le couvercle 30 et la ceinture 31 conformés à cet effet comme à la figure 1.

L'élément inverseur 13 est propre à être manoeuvré, après rattrapage d'un jeu, par un index saillant 15 en forme de doigt porté à articulation par le pont inverseur 2.

Suivant l'invention un commutateur électrique du type sus-indiqué est caractérisé en ce que le pont inverseur 2 est monté à articulation à l'une de ses extrémités dans le boîtier 1, en ce que ledit pont coopère à l'autre de ses extrémités avec une came de sélection 5 montée à articulation dans le boîtier 1 et soumise à l'action d'un moyen élastique 6 s'appuyant sur une paroi du boîtier 1 pour solliciter ladite came en direction de l'extrémité concernée 25 du pont inverseur 2, et en ce que l'élément inverseur consiste en une came inverseuse 13 montée à articulation dans le boîtier 1.

Ici les pièces 2,5,13 sont en matière plastique électriquement isolantes et avantageusement moulables, en sorte que l'index 15 peut être avantageusement d'un seul tenant avec le pont inverseur 2 en étant relié à celui-ci dans sa partie supérieure par une charnière fine 23 et un peu plus bas par deux bretelles élastiques ondulées 21,22 (figure 4) disposées de part et d'autre dudit index 15.

Ainsi on voit que le pont 2, ici nervuré, présente globalement centralement une cavité délimitée par un dôme 28 portant la protubérance 147. Cette cavité loge la partie supérieure de l'index 15 en forme de doigt ainsi que la charnière 23 et au moins en majeure partie les bretelles 21,22. Tout ceci peut être obtenu aisément par moulage.

Les bretelles 21,22 permettent de maintenir l'index 15 dans une position centrale de repos (figure 4) et également d'assurer un rappel de celui-ci.

Grâce à cette disposition on diminue encore le nombre de pièces par rapport à l'art antérieur, dans lequel l'index était soumis à l'action d'un ressort monté dans le pont 2 et maintenant l'extrémité cylindrique de l'index en contact avec une portion cylindrique complémentaire ménagée dans le pont inverseur 2 avec intervention d'une pièce intermédiaire.

Le pont 2 présente latéralement une protubérance 148 dans laquelle est ménagé un trou borgne 149 permettant le montage d'un ressort 49 du type ressort à boudin s'appuyant sur le fond dudit trou 149 et sur une première pièce de contact électrique 48 mobile à translation à l'intérieur du trou 149 et portée par le pont inverseur 2 pour coopération avec des pistes du circuit 35.

Ici cette première pièce de contact 48 consiste en une lame comme dans l'art antérieur, ladite lame portant à son extrémité basse des saillies propres a établir des contacts et des circuits électriques avec les pistes du circuit 35.

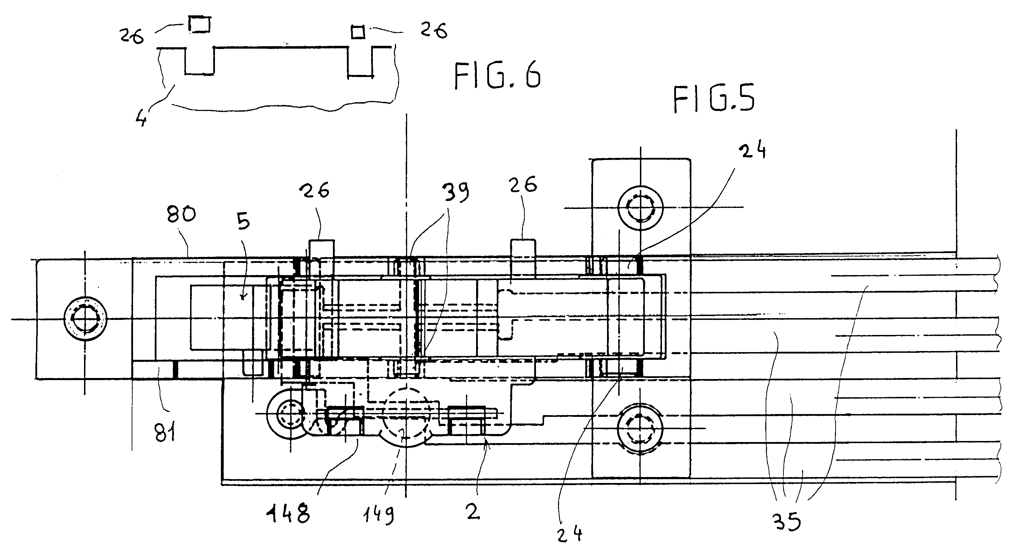

Ici le pont inverseur 2 et les cames 5,13 sont déplaçables en rotation entre deux parois longitudinales 80,81 appartenant à un support rapporté par trois vis (non référencées à la figure 5) sur la platine 32.

Ainsi le boîtier 1 est compartimenté comme à la figure 1 ; le chariot sélecteur étant logé dans un premier compartiment délimité par la paroi 80, les cames 5,13 et le pont 2 dans un deuxième compartiment délimité par les parois 80 et 81 et la protubérance 148 dans un troisième compartiment délimité par la paroi 81.

Bien entendu les parois 80,81 peuvent être venues de moulage de la ceinture 31 comme à la figure 1.

Ce pont inverseur 2 est propre à coopérer grâce à son index 15 avec la came inverseuse 13 selon l'invention de manière décrite ci-après.

Ici le pont 2 est monté à articulation dans le boîtier 1 à la faveur de deux tourillons 24 venus d'un seul tenant par moulage avec le pont 2.

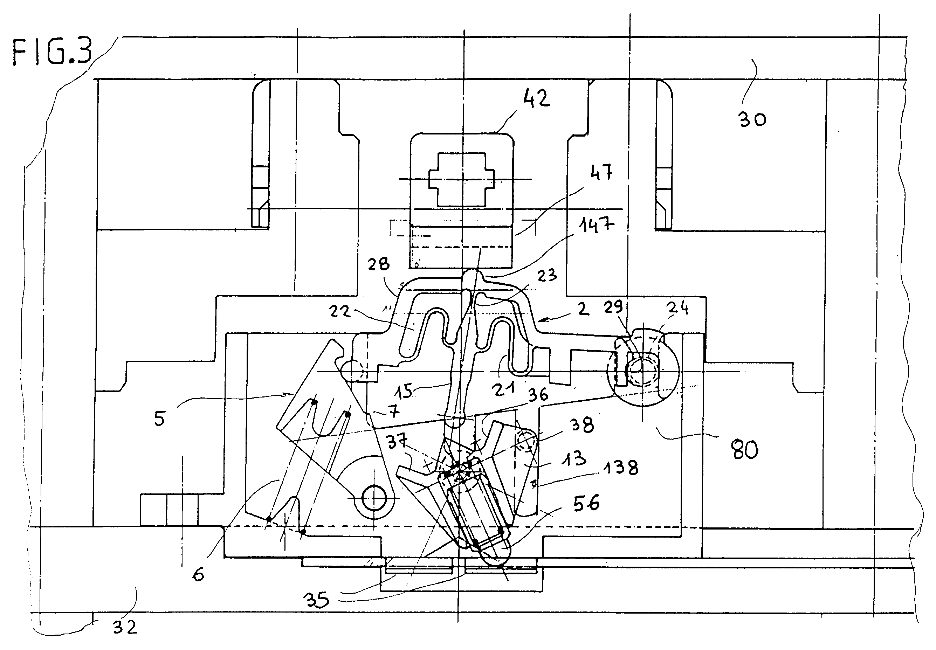

Ces tourillons 24 sont solidaires de l'une et de l'autre des parois longitudinales (figure 5) du pont 2 en étant montés chacun dans un berceau, dont l'un est visible en 29 à la figure 3, ménagé respectivement dans les parois 80 et 81.

Ces parois 80,81 sont munies chacune d'une fente non référencée délimitant un berceau pour montage de tourillons 39 (figures 4 et 5) solidaires de l'une et de l'autre des faces longitudinales de la came 13 (figure 5). Les tourillons 39 sont implantés dans la partie supérieure de la came 13 au voisinage du trou borgne 59 de celle-ci.

La partie supérieure de la came 13 présente deux creusures 36,37 en forme de V dont le fond est arrondi.

La came 13 porte à l'une de ses extrémités latérales une butée 38 en forme de pion traversant une lumière profilée 138 pratiquée dans la paroi 80. La lumière 138 s'étend transversalement dans le plan de la figure 4, donc perpendiculairement avec la platine 32.

Ainsi qu'on l'aura compris, lorsque l'usager manoeuvre en rotation la manette 40 dans le plan de la figure 2, la saillie 47 de la portion 42 de la manette 40 coopère avec la protubérance 147 du pont 2, ce qui fait descendre de manière pivotante ledit pont.

Dans un premier temps on réalise la fonction appel-optique de manière décrite ci-après, puis après rattrapage du jeu qui existe initialement entre l'index 15 et la came 13 (figure 4), l'extrémité libre hémisphérique de l'index 15 coopère avec l'encoche 36 en considérant la figure 3 en sorte que lorsque le mouvement de pivotement du pont 2 se poursuit, ledit index fait pivoter la came 13 par coopération avec l'encoche 36.

Plus précisément dans une première étape l'index 15 coopère avec l'une des faces inclinées de l'encoche puis vient en contact avec le fond de l'encoche et ensuite avec l'autre face inclinée de l'encoche 36 ce qui fait basculer la came 13 avec passage du plot 56 de la piste associée à la position code (figure 3) à l'autre piste associée à la position phare. Ce mouvement de basculement est limité par la butée 38 qui vient alors en butée avec la partie basse de la lumière associée 138 pratiquée dans la paroi 80, comme visible en pointillés à la figure 4.

Ainsi on peut réaliser une inversion code-phare et passer de la position code à la position phare et vice versa lorsque le chariot sélecteur 4 de la figure 1 est en position route. Au cours du mouvement de pivotement de la came 13, dite came en forme de coeur, on obtient un auto-nettoyage des pistes concernées du circuit 35 avec rétraction du plongeur 57 suivi d'une détente.

On notera que l'index 15 est admis à s'incliner, l'axe de symétrie de l'index 15 étant initialement incliné par rapport à l'axe de symétrie de la portion 42 de la manette (figure 3) lorsque le pont inverseur est en position de repos.

Lorsque la came 13 est dans sa position phare et que l'on actionne le pont inverseur on provoque un basculement de ladite came dans la position représentée à la figure 3 avec limitation du mouvement par coopération de la butée 38 avec la lumière de la paroi 80. La butée 38 est alors en position haute. Bien entendu la lumière 138 est plus large que la butée 38 en forme de pion cylindrique pour permettre le mouvement de la came 13. Seule la face 139, la plus proche de l'index 15, de la lumière sert donc de butée.

La came inverseuse 5 présente sur sa face latérale dorsale un trou borgne de forme tronconique 12 avec un téton central permettant le montage du moyen élastique 6 en forme de ressort à boudin dont l'autre extrémité s'appuie sur une paroi du support précité solidaire du boîtier 1.

Le ressort 6 sollicite la came 5 en direction de l'extrémité concernée du pont inverseur 2, ladite extrémité 25 étant profilée en étant par exemple de forme cylindrique pour contact ponctuel avec la came 5. Plus précisément cette extrémité s'engage dans une encoche 10 délimitée par une première butée 9, située au voisinage de l'extrémité supérieure de la came 5, et une seconde butée 7 de fin de course d'appel-optique, située globalement dans la partie médiane de la came 5. Au-delà de la butée 7 la paroi supérieure de la came 5 se prolonge par une face inclinée 11 jusqu'à l'extrémité inférieure de la came 8 portant d'un seul tenant, de part et d'autre de son plan, des tourillons 8 montés dans des trous pratiqués dans les parois 80 et 81.

Ainsi initialement la lame 8 n'est pas en contact avec la piste concernée du circuit 35 et, lorsque, a l'aide de la manette 40 on fait basculer le pont 2 dans les berceaux 29 de ses tourillons 24, dans une première étape l'extrémité 25 se déplace le long du fond de l'encoche 10 entre les butées 9,7 avec compression du ressort 6.

Lorsque l'extrémité 25 arrive au voisinage de la butée 7 de fin de course d'appel-optique, la lame 48, qui se rétracte à l'intérieur de son logement 149, établit un contact entre les pistes concernées du circuit 35 en sorte que l'on établit un contact électrique et la fonction appel-optique.

On appréciera que l'on a une bonne sensation tactile car lorsque l'on passe de la butée 9 à la butée 7 on comprime progressivement le ressort 6. Après passage de la butée 7, formant un point dur, l'index 15 vient en contact avec l'échancrure 36 en sorte que l'on peut réaliser dans un deuxième temps la fonction inversion code-phare et vice versa. Lors de cette inversion la lame 48 pénètre un peu plus dans le trou 149, un auto-nettoyage des pistes est réalisé, et l'extrémité 25 se déplace le long de la face inclinée 11 et ce de manière douce.

Ainsi la butée 7 assure deux fonctions à savoir, d'une part, une butée de fin de course de la fonction appel-optique et, d'autre part, une sélection entre la fonction appel-optique et la fonction inversion code-phare.

On notera que la butée 38 assure deux fonctions à savoir une butée de fin de course pour la fonction inverseur et également une fonction de réinitialisation.

En effet la butée 38 est propre à coopérer avec le chariot sélecteur en sorte que lorsque l'on déplace le chariot sélecteur 4 de la figure 1, à l'aide de la bague de sélection repos-ville-route portée par la manette 40 de manière précitée, de la position route à la position de repos, ledit chariot coopère avec ladite butée 38 et ramène la came 13 à sa position initiale code lorsque celle-ci était en position phare. Cette réinitialisation peut être réalisée en sens inverse. Ceci est aisément réalisable à l'aide d'une rampe (non visible) prévue à cet effet sur le chariot sélecteur.

Le pont inverseur 2 présente également deux doigts de butée 26 traversant la paroi 80. Ces doigts 26 sont destinés à coopérer avec la face supérieure du chariot sélecteur 4.

Lorsque le chariot sélecteur est en position route, les butées 26 sont en regard chacune d'une échancrure 126 ménagée dans ledit chariot 4, en sorte que l'on peut réaliser la fonction appel-optique et la fonction inverseur.

Lorsque le chariot sélecteur 4 est en position ville, les butées 126 ne sont plus en regard des échancrures 126 en sorte que l'on peut réaliser uniquement la fonction appel-optique. Dans tous les cas, les butées 26, ici d'orientation perpendiculaire au plan des cloisons 80,81, limitent le mouvement du pont inverseur 2 par coopération soit avec le fond des échancrures 126 soit avec la face supérieure du chariot sélecteur 4.

Bien entendu la présente invention n'est pas limitée à l'exemple de réalisation décrit. Par exemple les tourillons 24 et 39 peuvent être rapportés respectivement sur le pont 2 et la came 13, il en est de même des tourillons 8.

Les bretelles 21,22 peuvent avoir une autre forme selon les applications et peuvent présenter plusieurs plis.

De même la forme de l'index 15, ici effilée au niveau de sa zone de raccordement avec la charnière 23, peut être de forme différente.

Si besoin est, on peut changer la forme des flancs des encoches 36,37 par exemple en creusant ou en bombant ceux-ci.

On appréciera que la venue en contact de la butée 38 avec la face 139 de la lumière 138 est moins bruyante que dans l'art antérieur, et que le dôme 28 protège les bretelles 21,22 et la charnière 23.

## Revendications

1. Commutateur électrique, notamment pour la commande de l'éclairage d'un véhicule, comportant à l'intérieur d'un boîtier (1), un élément d'entraînement (2), dit pont inverseur, propre à être soumis à l'action de moyens de commande (40) à la disposition de l'utilisateur, un élément inverseur (13) monté en-dessous du pont inverseur (2) et propre à être manoeuvré, après rattrapage d'un jeu, par un index saillant (15) porté à articulation par le pont inverseur (2), une première pièce de contact électrique mobile (48) portée par le pont inverseur (2), une seconde pièce de contact mobile (56) portée par l'élément inverseur (13), dans lequel lesdites pièces de contact (48,56) sont propres a coopérer avec des pistes électriques (35) portées par le boîtier (1) pour établir ou interrompre des circuits électriques, caractérisé en ce que le pont inverseur (2) est monté à articulation à l'une de ses extrémités (24) dans le boîtier (1), en ce que ledit pont (2) coopère à l'autre de ses extrémités (25) avec une came de sélection (5) montée à articulation dans le boîtier (1) et soumise à l'action d'un moyen élastique (6) s'appuyant sur une paroi du boîtier (1) pour solliciter ladite came en direction de l'extrémité concernée du pont inverseur (2), et en ce que l'élément inverseur (13) consiste en une came inverseuse montée à articulation dans le boîtier (1).

2. Commutateur électrique selon la revendication 1, caractérisé en ce que l'index (15) est d'un seul tenant avec le pont inverseur (2).

3. Commutateur électrique selon la revendication 2, caractérisé en ce que l'index (15) est relié dans sa partie supérieure par une charnière fine (23) au pont inverseur (2) et par deux bretelles élastiques ondulées (22) disposées de part et d'autre dudit index.

4. Commutateur électrique selon la revendication 3, caractérisé en ce que le pont inverseur (2) présente une cavité délimitée par un dôme (28) pour logement de l'index (15) de la charnière (23) et au moins en majeure partie des bretelles (21,22).

5. Commutateur électrique selon l'une quelconque des revendications 1 à 4, caractérisé en ce que le pont inverseur (2) porte d'un seul tenant sur chacune de ses faces longitudinales des tourillons (24) montés chacun dans un berceau (29) pratiqué dans une paroi (80,81) solidaire du boîtier (1).

6. Commutateur électrique selon l'une quelconque des revendications 1 à 5, caractérisé en ce que le pont inverseur (2) présente une extrémité profilée (25) pour coopérer avec la came de sélection (5).

7. Commutateur électrique selon la revendication 6, caractérisé en ce que la came de sélection comporte une encoche (10) délimitée par deux butées (7,9), le fond de l'encoche (10) étant propre à venir en contact avec l'extrémité profilée (25) du pont inverseur (2) sous l'action du moyen élastique (6).

8. Commutateur électrique selon la revendication 7, caractérisé en ce que la came de sélection (5) se prolonge au-delà de l'une de ses butées (7) située globalement dans sa partie médiane par une face inclinée (11).

9. Commutateur électrique selon la revendication 7 ou 8, caractérisé en ce que la came de sélection (5) est montée à articulation dans sa partie basse dans le boîtier (1).

10. Commutateur électrique selon la revendication 9, caractérisé en ce que la came de sélection (5) porte des tourillons (8) engagés dans des trous ménagés dans des parois (80,81) solidaires du boîtier (1).

11. Commutateur électrique selon l'une quelconque des revendications 7 à 10, caractérisé en ce que la came de sélection comporte un trou borgne (12) avec un téton pour montage du moyen élastique (6) consistant en un ressort à boudin.

12. Commutateur électrique selon la revendication 11, caractérisé en ce que l'autre extrémité du ressort à boudin (6) est montée sur un téton solidaire d'une paroi du boîtier (1).

13. Commutateur électrique selon l'une quelconque des revendications 1 à 12, caractérisé en ce que la came inverseuse (13) présente centralement un trou borgne (59) pour montage d'un plongeur (58) portant un plot de contact (56) formant la seconde pièce de contact mobile, ledit plot (56) étant propre à coopérer avec des pistes électriques appartenant à un circuit prédécoupé (35) porté par le boîtier (1), et en ce que ledit plongeur (57) est soumis à l'action d'un ressort logé dans le plongeur (59) et s'appuyant sur le fond du trou borgne (59) de la came inverseuse (13).

14. Commutateur électrique selon l'une quelconque des revendications 1 à 13, caractérisé en ce que la came inverseuse (13) présente dans sa partie supérieure deux encoches (36,37) en forme de V à fond arrondi pour coopération avec l'extrémité libre de l'index (15).

15. Commutateur électrique selon l'une quelconque des revendications 1 à 14, caractérisé en ce que la came inverseuse (13) présente latéralement une butée (38) propre à coopérer, d'une part, avec un chariot sélecteur monté à l'intérieur du boîtier (1), et d'autre part, avec une lumière pratiquée dans une paroi (80) solidaire du boîtier (1).

16. Commutateur électrique selon l'une quelconque des revendications 1 à 15, caractérisé en ce que la came de sélection (13) présente d'un seul tenant deux tourillons (39) sur chacune de ses faces, chaque tourillon étant monté dans un berceau porté par une paroi (80,81) solidaire du boîtier (1).

17. Commutateur électrique selon l'une quelconque des revendications 1 à 16, caractérisé en ce que le pont inverseur (2) présente deux saillies propres à coopérer avec un chariot sélecteur monté à l'intérieur du boîtier (1).
